# EUROPEAN PATENT SPECIFICATION

(11) **EP 2 167 416 B1**
(45) Date of publication and mention of the grant of the patent: **15.04.2015**
(21) Application number: 08758733.3
(22) Date of filing: 23.05.2008
(51) Int. Cl.: B66F 9/075, B62D 7/15

(54) **THREE-WHEEL FORKLIFT TRUCK**
DREI-RAD GABELSTAPLER
CHARIOT ELEVATEUR A FOURCHES A TROIS ROUES

(30) Priority: 24.05.2007 IE 20070379
(43) Date of publication of application: 31.03.2010
(73) Proprietor: McVicar, Martin, Monaghan PO Monaghan (IE)
(72) Inventor: McVicar, Martin, Monaghan PO Monaghan (IE)
(74) Representative: Brophy, David Timothy
(86) International application number: PCT/EP2008/004140
(87) International publication number: WO 2008/141836

(56) References cited:
- EP-A- 1 657 140
- WO-A-03/059799
- US-A- 4 157 125

## Description

This invention relates to a three-wheel forklift truck.

A three-wheel forklift truck is described in WO 03/059799 having three modes of operation: forward-reverse, sideways, and carousel. To operate in carousel mode, all three wheels are aligned tangentially along a circle and the driven rear wheel and at least one of the two driven front wheels rotate the truck in a desired direction about the circle. The other of the two front wheels can either have its normal drive direction reversed so that it too drives the truck in the desired carousel direction of rotation, or its normal drive direction can be maintained in which case it will oppose the turning force of the rear and first front wheel, but will be overpowered and forced to rotate against the hydraulic pressure in its motor.

The invention provides a forklift truck comprising a chassis having two driven, steerable front wheels and a single driven rear wheel disposed centrally between, but displaced rearwardly of, the front wheels, wherein the truck is operable in a sideways mode in which the rear wheel is fixed at an angle substantially parallel to an axis passing through the two front wheels and the two front wheels are steered in synchronism in opposite directions of rotation, and wherein the truck is operable in a rotational mode in which the centre of rotation of the truck is disposed inside a notional circle passing through all three wheels, the truck entering the rotational mode from the sideways mode by automatic reversal of the drive direction of the rear wheel when the centre of rotation moves from outside to inside the notional circle.

An embodiment of the invention will now be described, by way of example, with reference to the accompanying drawings, in which:
Figures 1A-1C are schematic plan views of a forklift truck according to a first embodiment of the invention, operating in standard mode.
Figures 2A-2C are schematic plan views of the truck of Figures 1A-1C operating in sideways mode.
Figures 3A-3C are schematic plan views of the truck of Figures 1A-1C operating in rotational mode.

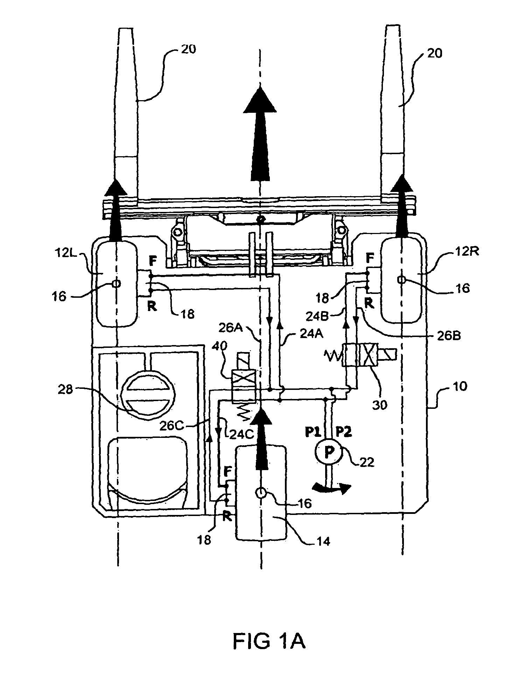

Referring to Figure 1A, a three-wheel, four-directional forklift truck with all-wheel drive comprises a chassis 10 having left and right front ground wheels 12L, 12R respectively and a single rear ground wheel 14 disposed centrally between, but rearwardly displaced, relative to the front wheels. All three wheels are steerable by rotation about respective substantially vertical axes 16. Such rotation is effected by a respective hydraulic cylinder associated with each wheel, the actuation/deactuation of the hydraulic cylinders being controlled by the truck driver using a steering wheel 28. This is well-known and is therefore not shown. The chassis carries a conventional mast (not shown) and lift forks 20.

Each wheel 12L, 12R and 14 can be driven selectively in either one of two opposite directions of rotation by a respective hydrostatic motor 18. Each motor has hydraulic fluid inlet ports F and R respectively, the application of hydraulic fluid under pressure to the inlet port F driving the wheel in a forward direction (indicated by the arrows in Figure 1A) and the application of hydraulic fluid under pressure to the inlet port R driving the wheel in the reverse direction. The motors 18 are driven by a hydraulic circuit which includes a pump 22 for supplying hydraulic fluid under pressure selectively to fluid supply ports P1 and P2 respectively, the supply ports being connected to the motors 18 by hydraulic lines 24A, 24B, 24C, 26A, 26B and 26C.

The inlet ports F, R of the right front wheel 12R are coupled to the supply ports P1, P2 of the pump 22 via a selectively actuable switchover valve 30. Similarly, the inlet ports F, R of the rear wheel 14 are coupled to the supply ports P1, P2 of the pump 22 via a selectively actuable switchover valve 40. The inlet ports F, R of the other front wheel 12L is non-switchably coupled to the supply ports P1, P2 respectively.

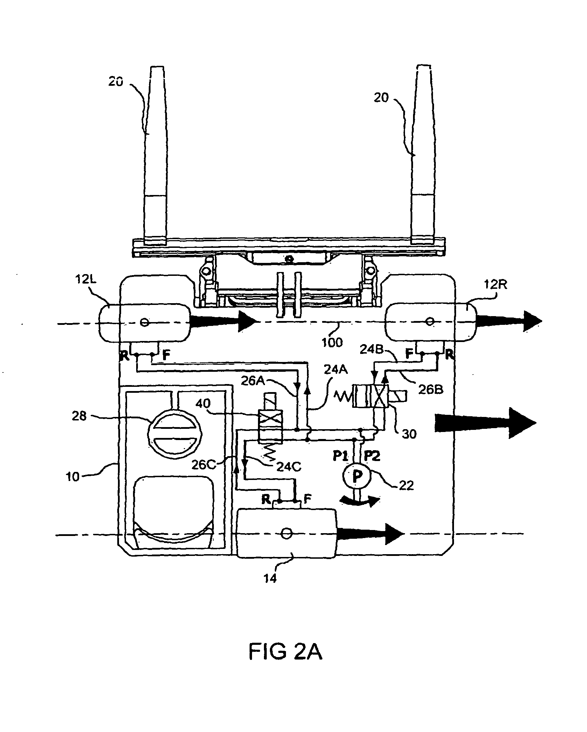

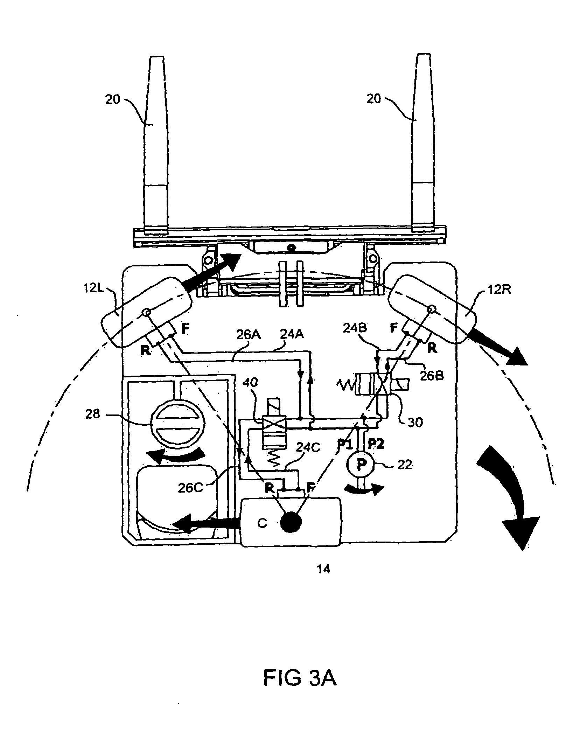

The operation of the valve 30 is such that when the valves is not actuated (as shown in Figures 1A-1C) the inlet ports F, R of the right front wheel 12R are connected to the supply ports P1, P2 respectively, whereas when the valve is actuated (Figures 2A-2C and 3A-3C) the hydraulic lines 24B, 26B cross over so that the inlet ports F, R of the wheel 12R are connected to the supply ports P2, P1 respectively. Similarly, the operation of the valve 40 is such that when the valve is not actuated (as shown in Figures 1A-1C) the inlet ports F, R of the rear wheel 14 are connected to the supply ports P1, P2 respectively, whereas when the valve is actuated (Figures 3A-3C) the hydraulic lines 24C, 26C cross over so that the inlet ports F, R of the wheel 14 are connected to the supply ports P2, P1 respectively. The valves 30 and 40 can be actuated and de-actuated hydraulically, mechanically, electro-magnetically or in any other suitable manner.

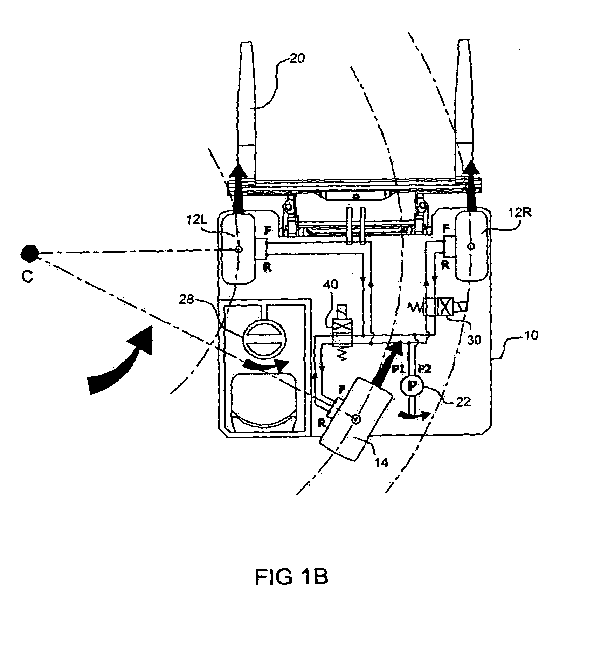

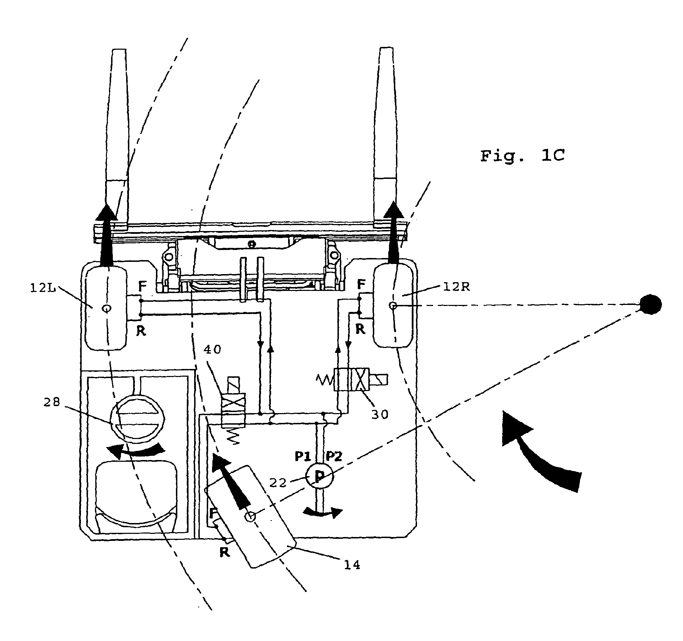

When the truck is configured for standard (i.e. forward/reverse) operation, Figures 1A-1C, the valves 30 and 40 not actuated. In order to drive the truck in the forward direction, fluid under pressure is supplied by the pump 22 to the supply port P1 and thus to the hydraulic lines 24A, 24B and 24C. Therefore, the fluid pressure is applied to the inlet port F of each wheel motor 18, and all three wheels are driven in a forward direction. In order to drive the truck in the reverse direction (not shown), the fluid under pressure supplied by the pump 22 is simply switched from the supply port P1 to the supply port P2 and is thus removed from the inlet ports F and applied to the inlet ports R via the hydraulic lines 26A, 26B and 26C. The switchover of the hydraulic fluid under pressure between the supply ports P1 and P2 is effected under operator control. In standard mode, in both forward and reverse drive directions, the front wheels 12L, 12R of the truck are turned parallel to one another in the front-to-rear direction and locked in that position, and the rear wheel 14 is steered by the operator in conventional manner to steer the vehicle, i.e. the rear wheel is rotated clockwise (Figure 1B) or anti-clockwise (Figure 1C) about its axis 16 as the steering wheel 28 is rotated one way or the other. In the drawings, the dash-dotted arcs are the paths of travel of the wheels of the truck and, when the truck is not moving in a straight line, the point C is the centre of rotation of the truck.

In order to configure the truck for operation in sideways mode, Figures 2A-2C, the rear wheel 14 is turned parallel to an axis 100 (Figure 2A) passing through the two front wheels and locked in that position, and the front wheels are turned inwards (i.e., in plan view the wheel 12L is rotated clockwise about its axis 16 and the wheel 12R anti-clockwise about its axis 16), each through 90°, so that they lie in line and parallel with the rear wheel (i.e. substantially normal to the front-to-rear direction of the chassis). Also, the valve 30 is actuated so that the hydraulic lines 24B, 26B cross over whereby the inlet ports F, R of the wheel 12R are connected to the supply ports P2, P1 respectively. These actions may be effected automatically by the vehicle control system (not shown) when the operator selects sideways mode, for example, by pressing a button located in the cab.

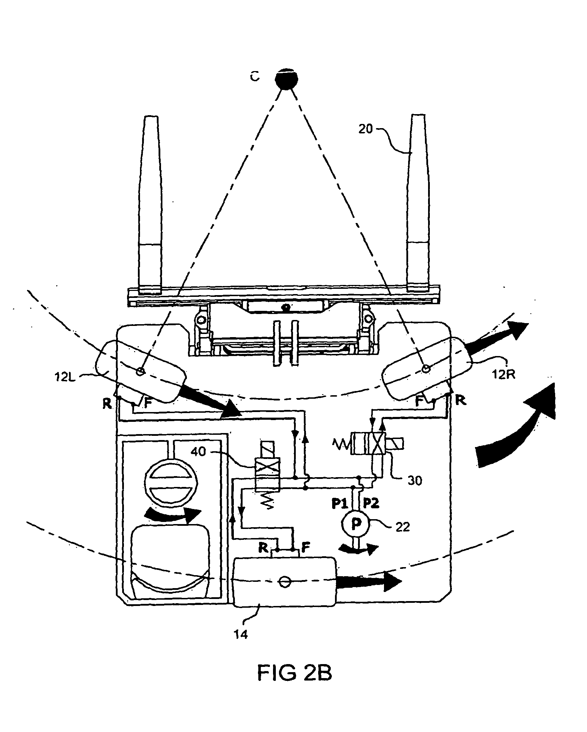

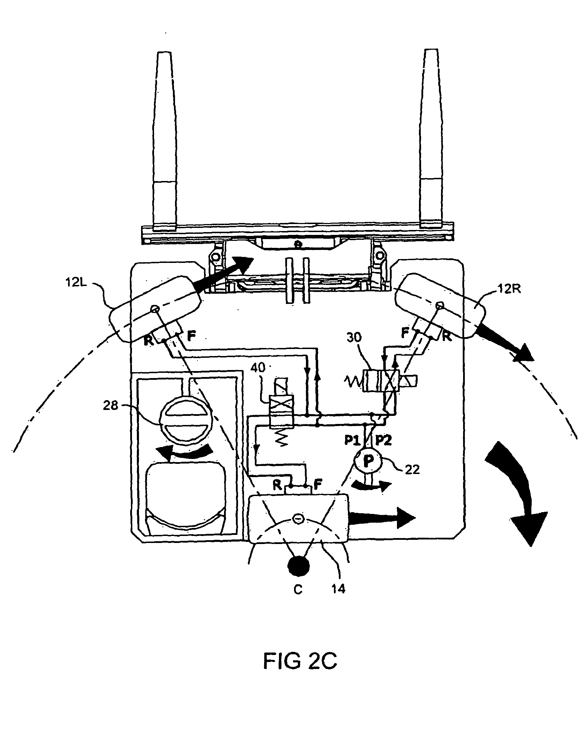

Now, if the hydraulic fluid under pressure is supplied to the port P1 all three wheels, and hence the truck, will drive to the right, as indicated by the arrows in Figure 2A. Alternatively, if the hydraulic fluid under pressure is supplied to the port P2, all three wheels will drive to the left (not shown). In sideways mode, in both left and right drive directions, the front wheels 12L, 12R of the truck can be steered by the operator, to change the directional course of the truck. When steering in sideways mode both front wheels rotate in synchronism in opposite directions, i.e. when one rotates clockwise about its axis 16 the other rotates anti-clockwise about its axis 16, and vice versa (Figs. 2B & 2C).

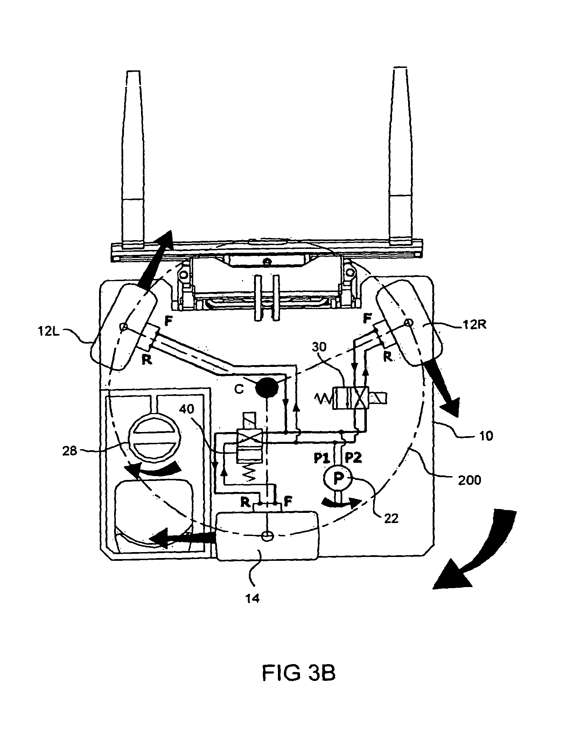

The truck is also operable in a rotational mode (Figures 3A-3C) in which the centre of rotation C of the truck is within a notional circle 200 (Figure 3B) passing through all three wheels. The truck can be made to enter rotational mode automatically from sideways mode by the operator turning the steering wheel 28 to rotate the front wheels 12L, 12R sufficiently to bring the centre of rotation C within the notional circle 200. At the point at which the centre of rotation C moves from outside to inside the notional circle 200, Figure 3A, the switchover valve 40 is automatically actuated to reverse the drive direction of the rear wheel 14 (compare Figures 2C and 3A). Correspondingly, the switchover valve 40 is automatically actuated when the centre of rotation C moves from inside to outside the notional circle 200, when reverting to sideways mode from rotational mode, to restore forward drive to the rear wheel 14. The point at which the centre of rotation C moves inside the notional circle 200 can be detected by, for example, a sensor attached to one of the front wheels. The sensor can be a proximity switch, a hydraulic switch or any other suitable mechanism for determining when the wheel has turned to a predetermined angle.

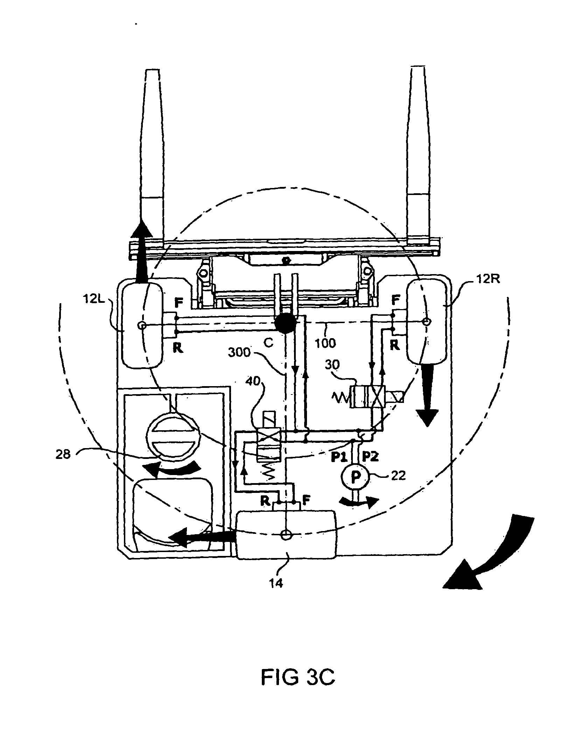

In rotational mode, like sideways mode, steering is as for sideways mode, i.e. both front wheels rotate in synchronism in opposite directions. The centre of rotation C can be anywhere along a line 300 (Figure 3C) extending from the rear wheel to a point midway along the axis 100.

Then, if it is desired to rotate the truck in a clockwise direction about the axis C, Figure 3A, hydraulic fluid under pressure is supplied to the port P1. This fluid pressure is applied via the lines 24A, 24B and 24C to the inlet port F of each wheel so that the wheels are driven in the directions indicated by the arrows.

If the truck enters rotational mode from sideways mode when the truck is moving left to right, the truck will rotate clockwise in rotational mode, as shown in Figures 3A-3C. However, if the truck enters rotational mode from sideways mode when the truck is moving right to left, the truck will rotate anti-clockwise in rotational mode.

The advantage of the above arrangement is that the truck enters rotational mode from sideways mode automatically by continuing to rotate the steering wheel 28 in the same direction. Other alternatives would work depending on the steering direction of the wheels, the side of the wheel the drive motors are mounted on, and even just coupling the switchover valve to the left front wheel instead of the right front wheel.

The invention is applicable to a three-wheel forklift truck driven by one or two hydrostatic motors, or indeed by other drive means.

The invention is not limited to the embodiment described herein and may be modified or varied without departing from the scope of the invention.

## Claims

1. A forklift truck comprising a chassis (10) having two driven, steerable front wheels (12L, 12R) and a single driven rear wheel (14) disposed centrally between, but displaced rearwardly of, the front wheels, wherein
the truck is operable in a sideways mode in which the rear wheel is fixed at an angle substantially parallel to an axis passing through the two front wheels and the two front wheels are steered in synchronism in opposite directions of rotation, and wherein the truck is operable in a rotational mode in which
the centre of rotation of the truck is disposed inside a notional circle (200) passing through all three wheels; **characterised in that** the truck enters the rotational mode from the sideways mode by automatic reversal of the drive direction of the rear wheel when the centre of rotation moves from outside to inside the notional circle.

2. A forklift truck as claimed in claim 1, wherein each wheel motor is a hydrostatic motor (18), the truck further including a hydraulic circuit (22, 24A, 24B, 24C, 26A, 26B, 26C, 30, 40) for supplying hydraulic fluid under pressure to each motor.

3. A forklift truck as claimed in claim 2, wherein each motor has first and second hydraulic fluid inlet ports, the application of hydraulic fluid under pressure to the first inlet port driving the wheel in one direction and the application of hydraulic fluid under pressure to the second inlet port driving the wheel in the opposite direction, and wherein the hydraulic circuit comprises a source (22) of hydraulic fluid under pressure having first and second fluid supply ports, the hydraulic fluid under pressure being selectively supplied at the first or second supply port.

4. A forklift truck as claimed in claim 3, wherein the first and second inlet ports of the rear wheel are coupled to the first and second supply ports via a selectively actuable switchover valve (40), wherein when the truck is operated in sideways mode the switchover valve is not actuated, and wherein when the truck enters rotational mode the switchover valve is automatically actuated.

5. A forklift truck as claimed in claim 4, wherein the rear wheel is also steerable and the truck is operable in a standard mode in which the two front wheels are fixed substantially parallel to one another in the front-to-rear direction of the chassis and the rear wheel is steered, and wherein the first and second inlet ports of one of the front wheels are coupled to the first and second supply ports via a further selectively actuable switchover valve (30), the further switchover valve not being actuated in the standard mode but being actuated in the sideways and rotational modes.

## Patentansprüche

1. Gabelstapler, der ein Fahrgestell (10) umfasst, das Folgendes aufweist: zwei angetriebene, lenkbare Vorderräder (12L, 12R) und ein einzelnes angetriebenes Hinterrad (14), das zentral zwischen den Vorderrädern, jedoch nach hinten von diesen versetzt angeordnet ist, wobei der Gabelstapler in einem Seitwärtsmodus betrieben werden kann, in dem das Hinterrad in einem Winkel fixiert ist, der im Wesentlichen parallel zu einer Achse verläuft, die durch die beiden Vorderräder verläuft und die beiden Vorderräder in entgegengesetzten Drehrichtungen synchron gelenkt werden und wobei der Gabelstapler in einem Drehmodus betrieben werden kann, in dem der Drehmittelpunkt des Gabelstaplers innerhalb eines gedachten Kreises (200) angeordnet ist, der durch alle drei Räder verläuft;
**dadurch gekennzeichnet, dass** der Gabelstapler vom Seitwärtsmodus in den Drehmodus übergeht, indem die Antriebsrichtung des Hinterrades automatisch umgekehrt wird, wenn der Drehmittelpunkt von der Außenseite zur Innenseite des gedachten Kreises bewegt wird.

2. Gabelstapler nach Anspruch 1, wobei jeder Radmotor ein hydrostatischer Motor (18) ist, und der Gabelstapler ferner einen Hydraulikkreis (22, 24A, 24B, 24C, 26A, 26B, 26C, 30, 40) umfasst, um jedem Motor Hydraulikfluid unter Druck zuzuführen.

3. Gabelstapler nach Anspruch 2, wobei jeder Motor eine erste und eine zweite Hydraulikfluideinlassöffnung aufweist, wobei durch Anlegen von Hydraulikfluid unter Druck an die erste Einlassöffnung das Rad in eine Richtung angetrieben wird und durch Anlegen von Hydraulikfluid unter Druck an die zweite Einlassöffnung das Rad in die entgegengesetzte Richtung angetrieben wird und wobei der Hydraulikkreis eine Quelle (22) von Hydraulikfluid unter Druck umfasst, die eine erste und eine zweite Fluidzufuhröffnung aufweist, wobei das Hydraulikfluid unter Druck der ersten oder zweiten Zufuhröffnung selektiv zugeführt wird.

4. Gabelstapler nach Anspruch 3, wobei die erste und zweite Einlassöffnung des Hinterrades mit der ersten und zweiten Zufuhröffnung über ein selektiv zu betätigendes Umschaltventil (40) gekoppelt sind, wobei, wenn der Gabelstapler im Seitwärtsmodus betrieben wird, das Umschaltventil nicht betätigt wird, und wenn der Gabelstapler in den Drehmodus übergeht, das Umschaltventil automatisch betätigt wird.

5. Gabelstapler nach Anspruch 4, wobei das Hinterrad ebenfalls lenkbar ist und der Gabelstapler in einem Standardmodus betrieben werden kann, in dem die beiden Vorderräder im Wesentlichen parallel zueinander in der Vorne-Hinten-Richtung des Fahrgestells fixiert sind und das Hinterrad gelenkt wird, und wobei die erste und zweite Einlassöffnung eines der Vorderräder mit der ersten und zweiten Zufuhröffnung über ein weiteres selektiv zu betätigendes Umschaltventil (30) gekoppelt sind, wobei das weitere Umschaltventil im Standardmodus nicht betätigt wird, jedoch im Seitwärts- und Drehmodus betätigt wird.

## Revendications

1. Chariot élévateur à fourche comportant un châssis (10) ayant deux roues avant orientables entraînées (12L, 12R) et une seule roue arrière entraînée (14) disposée de manière centrale entre les roues avant, mais décalée vers l'arrière par rapport à celles-ci, dans lequel le chariot est en mesure de fonctionner dans un mode latéral dans lequel la roue arrière est fixée selon un angle sensiblement parallèle à un axe traversant les deux roues avant et les deux roues avant sont orientées de manière synchrone dans des directions de rotation opposées, et dans lequel le chariot est en mesure de fonctionner dans un mode de rotation dans lequel le centre de la rotation du chariot est disposé à l'intérieur d'un cercle théorique (200) traversant l'ensemble des trois roues ; **caractérisé en ce que** le chariot entre dans le mode de rotation à partir du mode latéral par inversion automatique de la direction d'entraînement de la roue arrière quand le centre de rotation se déplace de l'extérieur vers l'intérieur du cercle théorique.

2. Chariot élévateur à fourche selon la revendication 1, dans lequel chaque moteur de roue est un moteur hydrostatique (18), le chariot comprenant par ailleurs un circuit hydraulique (22, 24A, 24B, 24C, 26A, 26B, 26C, 30, 40) destiné à distribuer un fluide hydraulique sous pression à chaque moteur.

3. Chariot élévateur à fourche selon la revendication 2, dans lequel chaque moteur a des premier et deuxième orifices d'admission de fluide hydraulique, l'application du fluide hydraulique sous pression au niveau du premier orifice d'admission entraînant la roue dans une direction et l'application de fluide hydraulique sous pression au niveau du deuxième orifice d'admission entraînant la roue dans la direction opposée, et dans lequel le circuit hydraulique comporte une source (22) de fluide hydraulique sous pression ayant des premier et deuxième orifices de distribution de fluide, le fluide hydraulique sous pression étant distribué de manière sélective au niveau du premier ou du deuxième orifice de distribution.

4. Chariot élévateur à fourche selon la revendication 3, dans lequel les premier et deuxième orifices d'admission de la roue arrière sont accouplés au premier et deuxième orifice de distribution par le biais d'une vanne d'inversion à commande sélective (40), dans lequel, quand le chariot est actionné dans le mode latéral, la vanne d'inversion n'est pas actionnée, et dans lequel, quand le chariot passe dans le mode de rotation, la vanne d'inversion est actionnée automatiquement.

5. Chariot élévateur à fourche selon la revendication 4, dans lequel la roue arrière est également en mesure d'être orientée et le chariot est en mesure de fonctionner dans un mode standard dans lequel les deux roues avant sont fixées de manière sensiblement parallèle l'une par rapport à l'autre dans la direction avant arrière du châssis et la roue arrière est orientée, et dans lequel les premier et deuxième orifices d'admission de l'une des roues avant sont accouplés aux premier et deuxième orifices de distribution par le biais d'une vanne d'inversion à commande sélective supplémentaire (30), la vanne d'inversion supplémentaire n'étant pas actionnée dans le mode standard mais étant actionnée dans le mode latéral et dans le mode de rotation.
